# EUROPEAN PATENT APPLICATION

(11) **EP 1 788 562 A2**
(43) Date of publication of application: **23.05.2007**
(21) Application number: 06077018.7
(22) Date of filing: 15.11.2006
(51) Int. Cl.: G11B 7/125

(54) **Method of determining optimum write power of optical disk and optical disk driving apparatus**

(30) Priority: 21.11.2005 KR 20050111435
(71) Applicant: Samsung Electronics Co., Ltd., Suwon-si, Gyeonggi-Do (KR)
(72) Inventor: Baek, Ji-seon, Suwon-si, Gyeonggi-do (KR); Otsuka, Tatsuhiro, Yeongtong-gu Suwon-si, Gyeonggi-do (KR)
(74) Representative: Hylarides, Paul Jacques

(57) **Abstract**

A method of determining an optimum write power of a recordable optical disk to control an optimum power of the recordable optical disk, and an optical disk driving apparatus using the same, the method including: performing a test, in which a test pattern is recorded on the optical disk and a write power by which a recording state of the test pattern is optimum is determined, a plurality of times by differently setting a start power each time; and determining optimum write power of the optical disk using optimum write power values obtained as a result of the tests.

## Description

### CROSS-REFERENCE TO RELATED APPLICATION

This application claims the benefit of Korean Patent Application No. 10-2005-0111435, filed on November 21, 2005, in the Korean Intellectual Property Office, the disclosure of which is incorporated herein by reference.

### BACKGROUND OF THE INVENTION

### 1. Field of the Invention

Aspects of the present invention relate to a method of determining an optimum write power of a recordable optical disk to control an optimum power of the recordable optical disk, and an optical disk driving apparatus using the same.

### 2. Description of the Related Art

To record data on an optical disk, suitable write power for the optical disk must be determined. The amount of write power used to record the data is closely related to a recording quality and a reproduction quality of the data. Thus, the write power is regulated as a standard. However, since an optimum value of the write power is closely related to the performance of an optical disk to be recorded and an optical disk device, the optimum value of the write power cannot be predetermined as a uniform value. Rather, the optical disk device detects the optimum write power and uses the detected optimum write power in a data recording operation. This process is called an optimum power control (OPC).

An example of a conventional OPC algorithm will now be schematically described. In general, parameters, such as target β, target γ, and target power (target start power), according to a recording speed and a disk manufacturer (disk code) are set in a memory of an optical disk driving apparatus. A controller of the optical disk driving apparatus determines an optimum write power by performing the OPC using the parameters when an optical disk is loaded. The OPC is performed using a β value in the case of a write-once optical disk (CD-R) and a γ value in the case of a rewritable optical disk (CD-RW).

When an optical disk is loaded into the optical disk driving apparatus, the controller records a test pattern in a test area of the loaded optical disk while changing write power by a predetermined amplitude based on a target start power. The target start power is set according to a disk code and recording speed of the loaded optical disk. When the recording of the test pattern is completed, a reproduction radio frequency (RF) signal is obtained by sequentially reading the recorded test pattern. Then, write power by which the test pattern has been recorded in an optimum state is determined by analyzing the reproduction RF signal. The determined write power becomes the write power to record data on a relevant optical disk in the future.

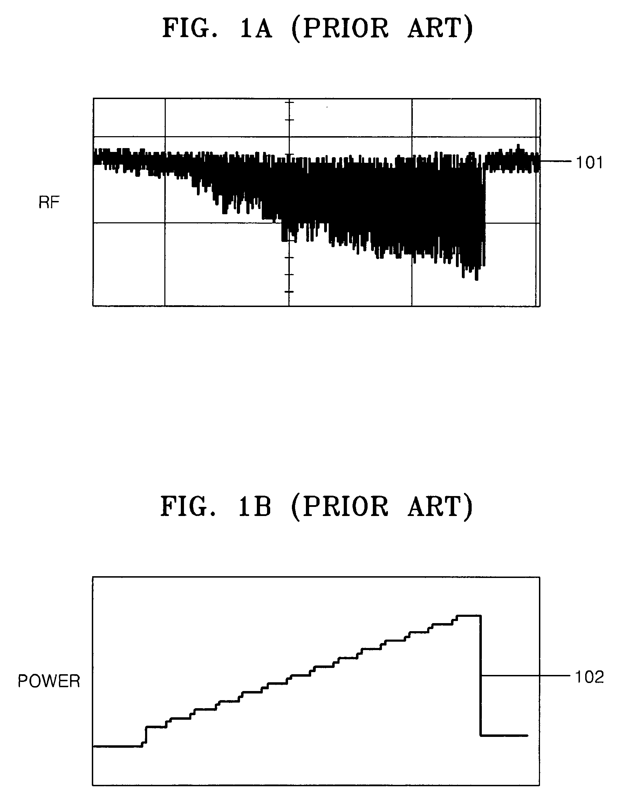

FIG. 1B is a diagram illustrating power 102 to record a test pattern in the conventional OPC algorithm and FIG. 1A shows an RF signal 101 with respect to a recording state according to the power 102. Referring to FIGs. 1A and 1B, a test pattern is recorded using 16 levels of power, each level obtained by increasing the power 102, beginning from the target start power, by a predetermined step. Then, a recording state is measured. As described above, the target start power is stored in the optical disk driving apparatus, and a per-disk value determined by experiments is used as the target start power.

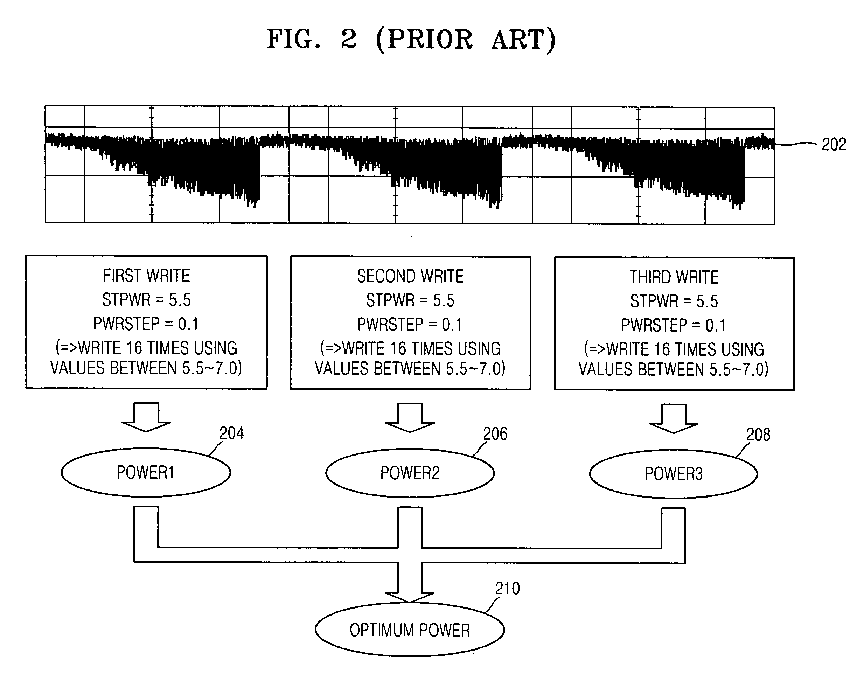

To more precisely perform the determination of the optimum write power, a technique of performing a test several times has been suggested. FIG. 2 is a diagram explaining a method of performing the test illustrated in FIG. 1 three times in the conventional OPC algorithm to determine optimum write power. Referring to FIG. 2, a test in which a test pattern is recorded using 16 levels of write powers starting from 5.5 mW with a 0.1 mW step. The test pattern is performed three times. Valid values are extracted by analyzing an RF signal 202 indicating recording states of the tests, and optimum write power values 204, 206, and 208 are obtained using the valid values. Then, a final optimum write power 210 is determined using the optimum write power values 204, 206, and 208 obtained as a result of the tests performed three times.

However, according to the conventional technique of performing a test several times with the same start power and the same power step, the number of valid values to calculate the optimum write power may be insufficient because of too high or too low a start power due to a change of environment. In this case, optimum write power higher or lower than an actual optimum write power may be extracted as a result of the OPC.

### SUMMARY OF THE INVENTION

Aspects of the present invention provide a method of determining an optimum write power of an optical disk to extract an accurate optimum write power regardless of a change of environment by increasing the number of valid values to calculate the optimum write power, and an optical disk driving apparatus using the same.

Aspects of the present invention also provide a method of determining an optimum write power of an optical disk to extract a more accurate optimum write power by setting different start powers every time a test pattern for an optimum power control (OPC) is recorded, and an optical disk driving apparatus using the same.

According to an aspect of the present invention, there is provided a method of determining an optimum write power of an optical disk, the method comprising: performing a plurality of tests, in each of which a different start power is set and a test pattern is recorded on the optical disk and a write power by which a recording state of the test pattern is optimum is determined, ; and determining the optimum write power of the optical disk using the optimum write power values obtained as a result of the tests.

According to an aspect of the present invention, the method may further comprise obtaining a target start power of the optical disk, wherein the performing of the test comprises performing one of the plurality of tests by setting the start power to the target start power.

According to an aspect of the present invention, the performing of each test may comprise: repeatedly recording the test pattern in different areas of the optical disk for a predetermined number of times while repeatedly increasing the write power of the test pattern from the set start power by a predetermined power step; and measuring recording states of the test pattern recorded for the predetermined number of times and determining a power of a test pattern recorded in the optimum state as the optimum write power of a current test.

According to an aspect of the present invention, the performing of each test may further comprise setting the start power to a value obtained by subtracting or adding an integer times the power step from or to the target start power.

According to another aspect of the present invention, there is provided an optical disk driving apparatus performing an optimum power control (OPC) to determine an optimum write power of an optical disk, the apparatus comprising a controller performing a plurality of tests, in each of which a different start power is set and a test pattern is recorded on the optical disk and a write power by which a recording state of the test pattern is optimum is determined, and determining the optimum write power of the optical disk using optimum write power values obtained as a result of the tests.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIGs. 1A and 1B are diagrams illustrating power to record a test pattern in a conventional optimum power control (OPC) algorithm to determine an optimum write power and a recording state according to the power;
FIG. 2 is a diagram explaining a method of performing a test three times in the conventional OPC algorithm to determine an optimum write power;
FIG. 3 is a flowchart illustrating a method of determining optimum write power according to an embodiment of the present invention;
FIG. 4 is a diagram explaining a method of determining an optimum write power according to an embodiment of the present invention;
FIG. 5 is a block diagram of an optical disk driving apparatus using a method of determining an optimum write power, according to an embodiment of the present invention; and
FIGs. 6A and 6B are diagrams comparing a test pattern recording result according to the prior art to a test pattern recording result according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

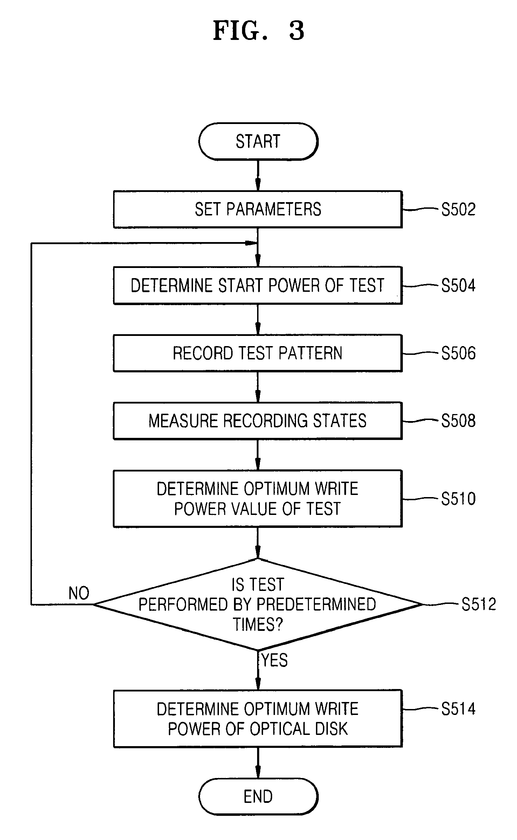

FIG. 3 is a flowchart illustrating a method of determining an optimum write power of an optical disk (such as, although not limited to, a CD-R, CD-RW, DVD-R, DVD-RW, HD-DVD, and blu-ray disk) according to an embodiment of the present invention. Referring to FIG. 3, in operation S502, parameters corresponding to a recording speed and a disk code of an optical disk are set. The parameters, including a target start power and a power step, are obtained by reading values stored in a memory of an optical disk driving apparatus driving a loaded optical disk. However, it is understood that the parameters may be stored externally and/or may be communicated to the optical disk driving apparatus through a wired or wireless communication method.

In the current embodiment, a single test includes a process of recording a predetermined number of OPC test patterns, each with different write powers, measuring and analyzing recording states of each OPC test pattern, and determining an optimum write power using the analysis results. In operation S504, the test begins by determining a start power. The test is performed a plurality of times by setting different start powers, and one of the plurality of tests may, although not necessarily, be performed by setting the start power to the target start power of the optical disk. The start power in each test, except the test in which the start power is set to the target start power, may be determined by subtracting or adding predetermined power from or to the target start power. For example, if the target start power is 5.5 mW, three tests can be performed by setting the start power in a first test to 5.2 mW, the start power in a second test to 5.5 mW (the target start power), and the start power in a third test to 5.8 mW. Likewise, five tests can be performed by setting the start power in the five tests to 5.1 mW, 5.3 mW, 5.5 mW, 5.7mW, and 5.9mW, respectively.

After the start power is determined, an OPC test pattern is repeatedly recorded in different areas of the optical disk for a predetermined number of times while repeatedly increasing the write power of the test pattern from the determined start power by a predetermined power step (operation S506). In general, the OPC test pattern is recorded in a test area assigned as an OPC area in the optical disk. After the recording, recording states of the OPC test pattern are measured in operation S508. Write power values by which the test pattern is acceptably recorded are called valid values. In operation S510, an optimum write power of a current OPC test is determined using the valid values. A mean value of the valid values or a value closest to the target start power among the valid values may be determined as the optimum write power of the current OPC test. However, aspects of the present invention are not limited thereto and may use other methods to determine the optimum write power from the valid values of each test.

In operation S512, n number of optimum write power values are determined by performing the OPC test described above a predetermined n number of times. In operation S514, the optimum write power of the optical disk is determined using the n number of optimum write power values. Various methods can be used to determine the optimum write power of the optical disk. For example, a mean value of the n number of optimum write power values or a value closest to the target start power among the n number of optimum write power values can be determined as the optimum write power of the optical disk.

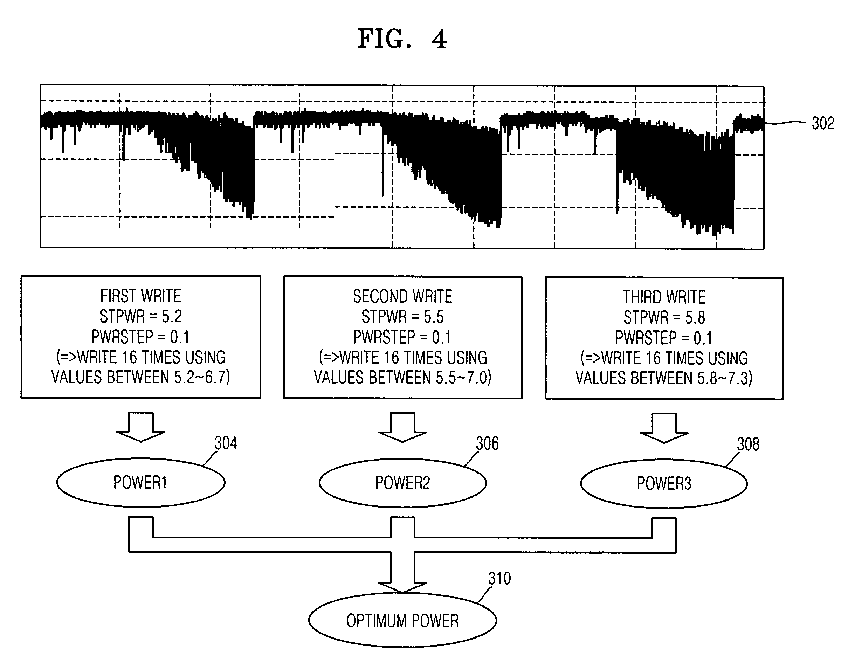

FIG. 4 is a diagram to explain a method of determining an optimum write power according to an embodiment of the present invention. Referring to FIG. 4, the optimum write power of an optical disk is, by way of example, determined by performing an OPC test three times. However, it is understood that according to other aspects, the OPC test may be performed two times or more than three times.

In the case of a first test (first write), an OPC test pattern is recorded using 16 write power values between 5.2 and 6.7 mW by setting a start power Stpwr to 5.2 mW and a power step Pwrstep to 0.1 mW. In the case of a second test (second write), an OPC test pattern is recorded using 16 write power values between 5.5 and 7.0 mW by setting Stpwr to 5.5 mW and Pwrstep to 0.1 mW. In the case of a third test (third write), an OPC test pattern is recorded using 16 write power values between 5.8 and 7.3 mW by setting Stpwr to 5.8 mW and Pwrstep to 0.1 mW. The start power of each test can be determined by subtracting or adding an integer times the power step from or to the target start power. In the current embodiment, three start power values 5.2 mW, 5.5 mW, and 5.8 mW are obtained by subtracting or adding three times the power step, i.e., 0.3 mW, from or to the target start power. However, it is understood that other addition/subtraction values can be used, the amounts of addition do not have to equal the subtraction, and the start powers can also be set instead of calculated. Moreover, while described in terms of each start power being different, it is understood that ones of the start powers can be the same.

Three values (Power1 304, Power2 306, and Power3 308) are obtained as an analysis result of an RF signal 302 indicating recording states of the OPC test pattern in the OPC tests, and an optimum write power 310 of the optical disk is determined using the three values (Power1 304, Power2 306, and Power3 308). For example, a mean value of the three values (Power1 304, Power2 306, and Power3 308) may be determined as the optimum write power 310 of the optical disk.

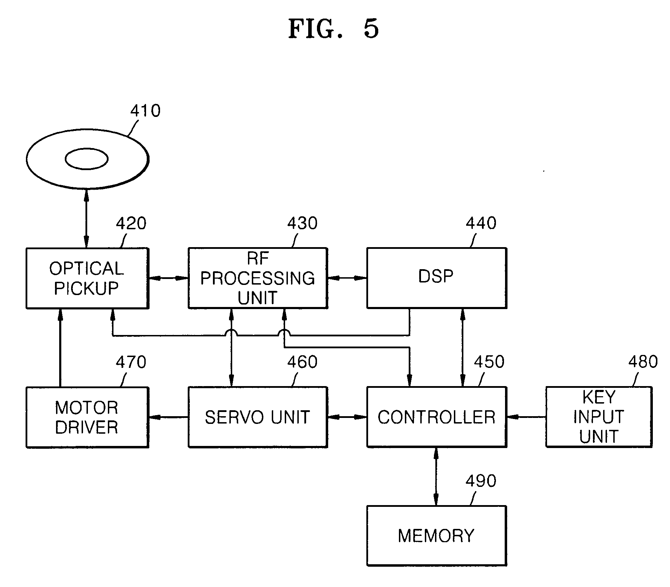

FIG. 5 is a block diagram of an optical disk driving apparatus using a method of determining an optimum write power, according to an embodiment of the present invention. Referring to FIG. 5, the optical disk driving apparatus includes an optical disk 410, an optical pickup 420, an RF processing unit 430, a digital signal processor (DSP) 440, a controller 450, a servo unit 460, a motor driver 470, a key input unit 480, and a memory 490. The optical pickup 420 writes data on the optical disk 410 or reads data recorded on the optical disk 410 by performing an optical pickup from the optical disk 410. The RF processing unit 430 generates an RF signal by performing waveform shaping of the data read by the optical pickup 420. The RF processing unit 430 also has an automatic laser power control function to control a power of a laser diode (LD) in an optimum state. The DSP 440 demodulates data by converting the RF signal generated by the RF processing unit 430 into a digital signal or modulates data in a data write mode. The controller 450 controls the optical pickup 420, the RF processing unit 430, the DSP 440, and the servo unit 460 in response to an instruction input by a user. Moreover, the controller 450 outputs a focusing servo or tracking servo on/off command to the servo unit 460. The controller 450 controls the servo unit 460 to generate a driving signal to focus, track, or spindle by referring to the RF signal generated by the RF processing unit 430. The servo unit 460 controls the motor driver 470 to perform a servo control to change a rotation speed of the optical disk 410 and a data read position of the optical pickup 420. The key input unit 480 outputs to the controller 450 a key signal to open or close a disk tray, to turn power to drive the optical disk driving apparatus on or off, and/or to write, read, or erase the optical disk 410. The memory 490 stores data for a control operation of the controller 450 and parameters for an OPC. However, it is understood that the memory may be an external storage medium or external storage unit that communicates with the optical disk driving apparatus and/or the controller 450 through a wired and/or wireless connection. Moreover, ones of these elements, such as the key input unit 480, are not required in all aspects, and that other elements can be added, such as a display.

The controller 450 performs an OPC algorithm to determine an optimum write power by controlling the optical disk driving apparatus. That is, the controller 450 performs an OPC test, in which an OPC test pattern is recorded on the optical disk 410 and a write power by which a recording state of the test pattern is optimum is determined, a plurality of times, each time setting a different start power. Then, the controller determines the optimum write power of the optical disk 410 using optimum write power values obtained in the plurality of tests. Each OPC test is performed by reading information on a target start power and a power step from the memory 490, setting a start power of each test as the target start power or power obtained by, for example, subtracting or adding an integer times the power step from or to the target start power, repeatedly recording an OPC test pattern on a test area of the optical disk 410 for a predetermined number of times while repeatedly increasing the write power of the OPC test pattern from the set start power by the power step, measuring recording states of the test pattern, and determining the write power by which the OPC test pattern is recorded in an optimum state as the optimum write power of the OPC test. For example, the test is performed three times by setting the start powers as the target start power for the first OPC test, a value obtained by subtracting an integer times the power step from the target start power for the second OPC test, and a value obtained by adding an integer times the power step to the target start power for the third OPC test. Then, a mean value of the optimum write power values of the three OPC tests is determined as the optimum write power of the optical disk 410. However, it is understood that other methods may be used to determine the optimum write power out of the optimum write power values of the OPC tests, such as using the optimum write power value that is closest to the target start value.

The above-described method according, to an aspect of the present invention, can be implemented as computer-readable codes in a computer-readable recording medium.

As described above, according to aspects of the present invention, since results measured using a wide variety of power values can be obtained, an accurate optimum write power can be determined.

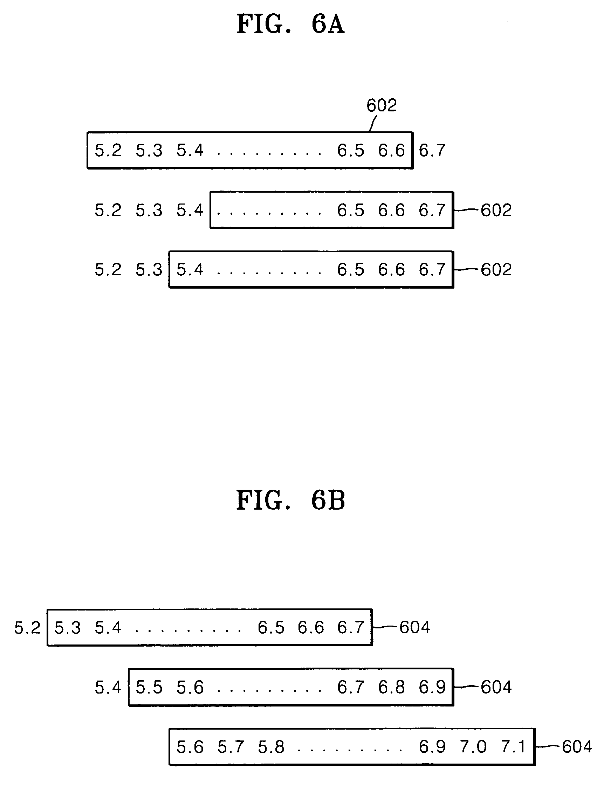

FIGs. 6A and 6B are diagrams to compare a test pattern recording result according to the prior art to a test pattern recording result according to an embodiment of the present invention. Referring to FIG. 6A, when a test is performed three times using the same start power, 5.2 mW, according to the prior art, valid values can be obtained from the write power values included in rectangular parts 602. Referring to FIG. 6B, when a test is performed, by way of example, three times using different start power values (5.2 mW, 5.4 mW, and 5.6 mW) according to an embodiment of the present invention, valid values can be obtained from more and various power values 604. Thus, since more power data can be obtained as a test result, a more efficient OPC can be performed.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A method of determining an optimum write power of an optical disk, the method comprising:
performing a plurality of tests, each comprising: setting a start power; recording a test patterns using the set start power with a plurality of write powers other than the set start power, such that a first of the plurality of write powers is the start power; and determining a write power by which a recording state of the test pattern is optimum, wherein the start power of one of the plurality of tests is different than the start power of another of the plurality of tests; and
determining the optimum write power of the optical disk using the determined write powers of each of the plurality of tests.

2. The method as claimed in claim 1, wherein the performing of the plurality of tests comprises:
performing a first test, of the plurality of tests, comprising: setting a first start power; recording a first test pattern using the set first start power with a first plurality of write powers other than the set first start power; and determining a first write power by which a first recording state of the first test pattern is optimum;
performing a second test, of the plurality of tests, comprising: setting a second start power, different from the first start power; recording a second test pattern using the set second start power with a second plurality of write powers other than the set second start power; and determining a second write power by which a second recording state of the second test pattern is optimum.

3. The method as claimed in claim 2, wherein
the performing of the first test comprises recalling from a memory the first start power, which is predetermined; and
the performing of the second test comprises calculating the second start power using the recalled first start power.

4. The method as claimed in claim 2, further comprising obtaining a target start power value of the optical disk.

5. The method as claimed in claim 4, wherein the performing of the first test comprises setting the first start power to the target start power value.

6. The method as claimed in claim 4, wherein the obtaining of the target start power value comprises reading the target start power value from a memory of an apparatus driving the optical disk.

7. The method as claimed in any of claims 1-6, wherein the recording of the test pattern comprises, for each of the plurality of tests:
recording the test pattern with a changing write power such that the write power increases, by a predetermined power step value, on an area of the optical disk that does not have a test pattern recorded thereon.

8. The method as claimed in claim 7, wherein the recording of the test pattern further comprises, for each of the plurality of tests, obtaining the predetermined power step value by reading the predetermined power step value from a memory of an apparatus driving the optical disk.

9. The method as claimed in claim 5, wherein the performing of the second test comprises setting the second start power to a value obtained by subtracting or adding an integer times a predetermined power step value from or to the target start power value.

10. The method as claimed in claim 5, wherein the performing of the plurality of tests further comprises:
performing a third test, of the plurality of tests, comprising: setting a third start power to a value obtained by subtracting, from the target start power value, an integer times a predetermined power step value; recording a third test pattern using the set third start power with a third plurality of write powers other than the set third start power; and determining a third write power by which a third recording state of the third test patterns is optimum,
wherein the performing of the second test comprises setting the second start power to a value obtained by adding the integer times the predetermined power step value to the target start power.

11. The method as claimed in claim 9, further comprising obtaining the predetermined power step value by reading the predetermined power step value from a memory of an apparatus driving the optical disk.

12. The method as claimed in any of claims 1-11, wherein the determining of the optimum write power comprises calculating a mean value of the determined write powers as the optimum write power of the optical disk.

13. The method as claimed in claim 4, wherein
the determining of the optimum write power comprises determining the first write power to be the optimum write power; and
a difference between the first write power and the target start power value is less than a difference between the second write power and the target start power value.

14. A computer readable recording medium encoded with the method according to any of the preceding claims, implemented by a computer.

15. An optical disk driving apparatus determining an optimum write power of an optical disk, the apparatus comprising:
an optical pickup to irradiate the optical disk to transfer data with respect to the optical disk; and
a controller to control the optical pickup to perform a plurality of tests, for each of which the controller sets a start power, records a test pattern using the set start power with a plurality of write powers other than the set start power, and determines a write power by which a recording state of the test pattern is optimum, wherein the start power of one of the plurality of tests is different than the start power of another of the plurality of tests; and to determine the optimum write power of the optical disk using the determined write powers of each of the plurality of tests.

16. The apparatus as claimed in claim 15, wherein
the controller controls the optical pickup to perform a first test, of the plurality of tests, for which the controller sets a first start power, records a first test pattern using the set first start power with a first plurality of write powers other than the set first start power, and determines a first write power by which a first recording state of the first test pattern is optimum; and
the controller controls the optical pickup to perform a second test, of the plurality of tests, for which the controller sets a second start power different from the first start power, records a second test pattern using the set second start power with a second plurality of write powers other than the set second start power, and determines a second write power by which a second recording state of the second test pattern is optimum.

17. The apparatus as claimed in claim 16, wherein the controller recalls, from a memory, the first start power, which is predetermined, and the controller calculates the second start power using the recalled first start power.

18. The apparatus as claimed in claim 16, wherein the controller obtains a target start power value of the optical disk.

19. The apparatus as claimed in claim 18, wherein the controller sets the first start power to the target start power value.

20. The apparatus as claimed in claim 19, wherein the controller sets the second start power to a value obtained by subtracting or adding an integer times a predetermined power step value from or to the target start power value.

21. The apparatus as claimed in claim 20, further comprising a memory to store the predetermined power step value,
wherein the controller obtains the predetermined power step value by reading the predetermined power step value from the memory.

22. The apparatus as claimed in claim 19, wherein
the controller controls the optical pickup to perform a third test, of the plurality of tests, for which the controller sets a third start power to a value obtained by subtracting, from the target start power value, an integer times a predetermined power step value, records a third test pattern using the set third start power with a third plurality of write powers other than the set third start power, and determines a third write power by which a third recording state of the third test pattern is optimum; and
the controller sets the second start power to a value obtained by adding an integer times the predetermined power step value to the target start power value.

23. The apparatus as claimed in claim 18, further comprising a memory to store the target start power value,
wherein the controller obtains the target start power value by reading the target start power value from the memory.

24. The apparatus as claimed in any of claims 15-23,
wherein, for each of the plurality of tests, the controller controls the optical pickup to record the test pattern with a changing write power such that the write power increases, by a predetermined power step value, on an area of the optical disk that does not have a test pattern recorded thereon.

25. The apparatus as claimed in claim 24, further comprising a memory to store the predetermined power step value,
wherein the controller obtains the predetermined power step value by reading the predetermined power step value from the memory.

26. The apparatus as claimed in any of claims 15-25,
wherein the controller calculates a mean value of the determined write powers as the optimum write power of the optical disk.

27. The apparatus as claimed in claim 18, wherein
the controller determines the first write power to be the optimum write power; and
a difference between the first write power and the target start power value is less than a difference between the second write power and the target start power value.
